# EUROPEAN PATENT APPLICATION

(11) **EP 4 848 011 A1**
(43) Date of publication of application: **02.12.2026**
(21) Application number: 26176925.1
(22) Date of filing: 06.05.2026
(51) Int. Cl.: G05B 15/02

(54) **SYSTEMS AND METHODS FOR AIDING IN COMMISSIONING ONE OR MORE COMPONENTS OF A BUILDING AUTOMATION SYSTEM**

(30) Priority: 30.05.2025 US 202519224249
(71) Applicant: Honeywell International Inc., Charlotte, NC 28202 (US)
(72) Inventor: SIVARAM, Vikramraj, Charlotte, 28202 (US); PANDIYAN, S.B. Saravana, Charlotte, 28202 (US); MENON, Chithira P S, Charlotte, 28202 (US); V, Thiruppathi, Charlotte, 28202 (US); JEEVAN, Senthil Kumar Somi, Charlotte, 28202 (US)
(74) Representative: Haseltine Lake Kempner LLP

(57) **Abstract**

A method and system for aiding in commissioning building automation system components includes receiving a desired system configuration and a live video stream of an operator's working area. The video stream is submitted to a multi-modal Language Model (LM) pre-trained on commissioning building automation components. The LM determines the operator's current objective and suggests actions for commissioning components according to the desired configuration. The system can determine if suggested actions are completed through video analysis, building automation system signals, and/or operator input. The LM can detect commissioning mistakes and notify the operator. The system supports both hardware and software commissioning tasks and can respond to operator queries based on the configuration and video stream. A commissioning tool includes a user interface, video camera, and controller to implement the method. The system outputs suggested actions in text, image, video or voice format.

## Description

### TECHNICAL FIELD

The present disclosure relates generally to building automation systems, and more particularly to systems and methods for aiding in commissioning one or more components of a building automation system.

### BACKGROUND

Building automation systems can include a large number of complex assets that must be installed and commissioned. This can present significant technical challenges for responsible personnel, especially for novice personnel that are not yet well versed in each of the assets and/or interactions of the building automation system. What would be desirable are systems and methods for aiding in commissioning one or more components of a building automation system using a pre-trained multi-modal Language Model (LM).

### SUMMARY

The present disclosure relates generally to building automation systems, and more particularly to systems and methods for aiding in commissioning one or more components of a building automation system. An example may be found in a method for commissioning one or more components of a building automation system. The method includes receiving a desired system configuration for each of one or more components of the building automation system and a live video stream of a current working area of an operator. The live stream is submitted to a multi-modal Language Model (LM) that is pre-trained on commissioning the one or more components of the building automation system. The multi-modal LM determines a current objective of the operator based at least in part on the live video stream of the current working area of the operator. Based on the current objective of the operator and the desired system configuration for each of one or more components of the building automation system, the multi-modal LM determines one or more suggested actions for the operator to take to commission one or more components of the building automation system in accordance with the desired system configuration. The one or more suggested actions are outputted to the operator to aid the operator in commissioning the building automation system.

Another example may be found in a commissioning tool to aid an operator in commissioning one or more components of a building automation system. The commissioning tool includes a user interface, a video camera for capturing a live video stream of the current working area of the operator, a multi-modal Language Model (LM) that is pre-trained on commissioning the one or more components of the building automation system, and a controller that is operatively coupled to the video camera, the multi-modal LM and the user interface. The controller is configured to receive a desired system configuration for each of one or more components of the building automation system and to receive the live video stream of the current working area of the operator captured by the video camera. The controller is configured to send the live video stream to the multi-modal Language Model (LM), wherein the multi-modal LM determines a current objective of the operator based at least in part on the live video stream of the current working area of the operator, and based on the current objective of the operator and the desired system configuration for each of one or more components of the building automation system, the multi-modal LM determines one or more suggested actions for the operator to take to commission one or more components of the building automation system in accordance with the desired system configuration. The controller is configured to receive the one or more suggested actions from the multi-modal LM and to output the one or more suggested actions to the user interface.

Another example may be found in a computer implemented interactive assistant for assisting an operator in commissioning one or more components of a building automation system. The computer implemented interactive assistant is configured to receive a desired system configuration for each of one or more components of the building automation system and a live video stream of a current working area of an operator as inputs. The computer implemented interactive assistant is configured to determine one or more suggested actions for the operator to take to commission one or more components of the building automation system in accordance with the desired system configuration based at least in part on the live video stream of the current working area of an operator and the desired system configuration for each of one or more components of the building automation system. The computer implemented interactive assistant is configured to output the one or more suggested actions to aid the operator in commissioning one or more components of a building automation system.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative building automation system and configuration tool;
Figure 2 is a schematic block diagram providing an illustrative overview;
Figure 3 is a schematic block diagram providing an illustrative architecture;
Figure 4 is a schematic block diagram showing an illustrative computer implemented interactive assistant;
Figures 5A and 5B are flow diagrams that together show an illustrative method for commissioning one or more components of a building automation system; and
Figures 6A, 6B, and 6C are flow diagrams that together show an illustrative method.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

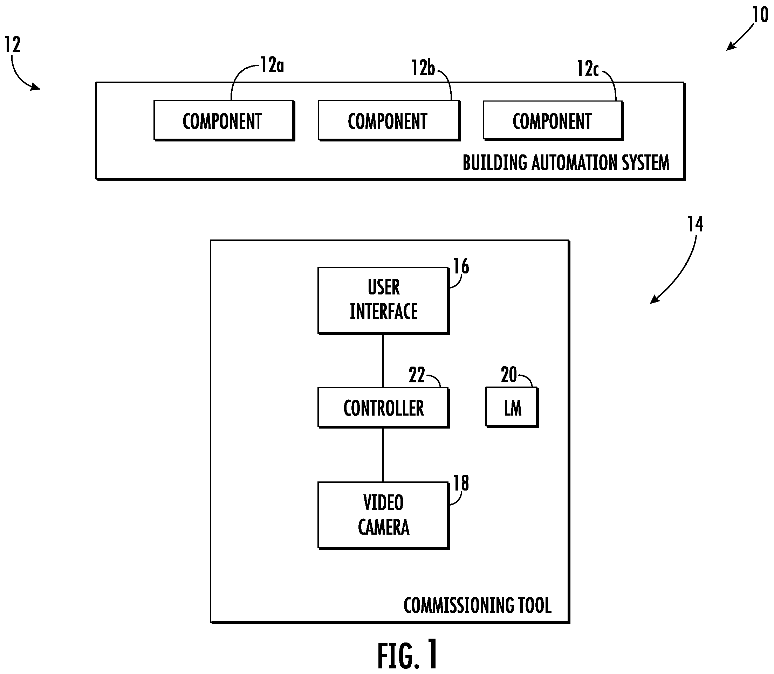

Figure 1 is a schematic block diagram showing an illustrative building automation system 10 and configuration tool 14. The illustrative building automation system 10 may include an access control system, a security system, a Heating, Ventilation and/or Air Conditioning (HVAC) system, a fire system, a lighting system, and/or any other suitable building automation system or component thereof. The building automation system 10 includes a number of components 12, individually labeled as 12a, 12b, and 12c. While a total of three components 12 are shown, this is merely illustrative. In some cases, the building automation system 10 may include considerably more than three components 12. When the building automation system 10 is an access control system, for example, the components 12 may represent door locks, access card readers, video cameras, and the like. In some cases, building automation system 10 and each of the components 12 may need to be installed and commissioned.

The commissioning tool 14 that may be used in aid an operator in commissioning the building automation system 10 and/or one or more of the components 12 of the building automation system 10. The illustrative commissioning tool 14 includes a user interface 16, which may for example include a display, a keyboard, a pointing device such as a mouse and/or any other user interface component.

A video camera 18 is configured for capturing a live video stream of a current working area of an operator. The illustrative commissioning tool 14 includes a multi-modal Language Model (LM) 20 that is pre-trained on commissioning the one or more components 12 of the building automation system 10. In some cases, the LM 20 may represent an LLM (Large Language Model). In some cases, the LM 20 may represent a VLM (Video Language Model). A controller 22 is operatively coupled to the video camera 18, the multi-modal LM 20, and the user interface 16.

The controller 22 is configured to receive a desired system configuration for at least part of the building automation system 10. In some cases, the controller 22 is configured to receive the desired system configuration for each of one or more components 12 of the building automation system 10. The controller 22 is also configured to receive a live video stream of the current working area of the operator captured by the video camera 18. The controller 22 is configured to send the live video stream to the multi-modal Language Model (LM) 20. The multi-modal LM 20 determines a current objective of the operator based at least in part on the live video stream of the current working area of the operator. Based on the current objective of the operator and the desired system configuration for each of one or more components 12 of the building automation system 10, the multi-modal LM 20 also determines one or more suggested actions for the operator to take to aid in commissioning one or more components 12 of the building automation system 10 in accordance with the desired system configuration. In some cases, the one or more suggested actions may include making or changing a hardware connection (e.g. wiring) to one or more components 12 of the building automation system 10. In some cases, the one or more suggested actions may include changing a software setting associated with one or more components 12 of the building automation system 10.

The controller 22 is configured to receive the one or more suggested actions from the multi-modal LM 20 and to output the one or more suggested actions to the user interface 16. In some cases, the multi-modal LM 20 may be configured to determine when the operator made a mistake in commissioning one or more components 12 of the building automation system 10 based at least in part on the live video stream of the current working area of the operator. In such cases, the controller 22 may be configured to output a notification via the user interface 16 that notifies the operator of the mistake, and in some cases a suggestion for how to correct the mistake.

The commissioning tool 14 may be in the form of a mobile device such as a mobile phone, a tablet computer, a laptop computer, smart glasses or any other suitable mobile device. In some cases, the commissioning tool 14 may be distributed among two or more separate devices. For example, the video camera 18 of the commissioning tool 14 may be part of a first device (mobile device), and the LM 20 may be part of a second device (cloud server). These are just examples.

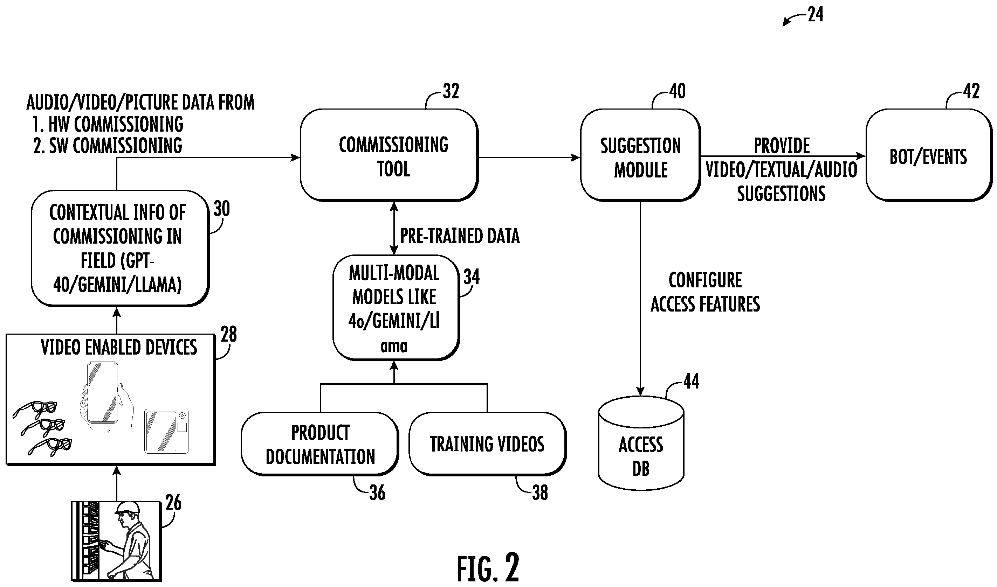

Figure 2 is a schematic block diagram showing an overview of a process 24 for commissioning a component (such as the components 12) of a building automation system (such as the building automation system 10). The process 24 begins with an operator beginning a process of commissioning a component, as indicated at block 26. Video-enabled devices may capture a current working area of an operator and what the operator is attempting to do, as indicated at block 28. This results in contextual information, as indicated at block 30. In some cases, the contextual information may include one or more of audio, video, and picture data from hardware commissioning and/or software commissioning. The contextual information is provided to a commissioning tool 32. The commissioning tool 32 may be considered as being an example of the commissioning tool 14.

Multi-modal models may be used, as indicated at block 34. The multi-modal models may be considered as being an example of the multi-modal LM 20. In some cases, data may flow back and forth between the commissioning tool 32 and the multi-modal models. In some case, the multi-modal models may be trained on information from product documentation 36 and/or training videos 38 prepared by the vendor(s) of the building automation system 10 and/or components 12. In the example shown, the commissioning tool 32 communicates with a suggestion model 40. The suggestion model 40 may provide suggestions including video, textual, and/or audio suggestions to a bot, as indicated at block 42, which may report the suggestions to the operator. In some cases, the suggestion model 40 may output one or more suggested configuration changes to a database 44 of the building automation system 10 to actually make the suggested configuration changes to the building automation system 10 and/or components 12 of the building automation system 10, sometimes requiring the operator to first approve the change(s).

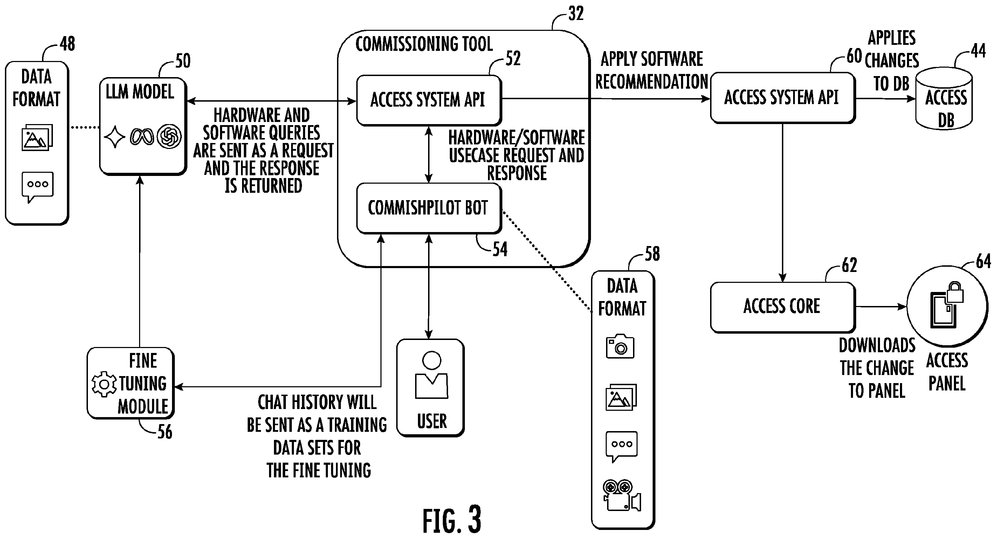

Figure 3 is a schematic block diagram showing an illustrative architecture 46. In the illustrative architecture 46, data 48 is provided to an LLM model 50. The LLM model 50 may be considered as being an example of the multi-modal LM 20. The LLM model 50 communicates with the commissioning tool 32. In some cases, hardware and software queries may be sent to the LLM model 50 as requests, and a response may be returned. In some cases, the commissioning tool 32 may include an API handle 52 and a CommishPilot Bot 54. The CommishPilot Bot 54 communicates with a user via a user interface. The CommishPilot Bot 54 may communicated a chat history to a fine tuning module 56. In some cases, the chat history may be used as additional training data for the LLM model to fine tune the LLM Model for future use. The CommishPilot Bot 54 may receive data in a number of different data formats, as indicated at block 58, such as still images, video, textual, and/or audio often captured by a commissioning tool 14. The commissioning tool 32 may provide hardware and/or software recommendations to aid in commissioning at least part of the building automation system 10. In the example shown, the commissioning tool 32 provides software recommendations to an access system API of an access system of the building automation system 10, as indicated at block 60. To affect the changes, the changes may be applied to a database 44 of the access control system, and in some cases, downloaded to an access panel 64 of the access control system.

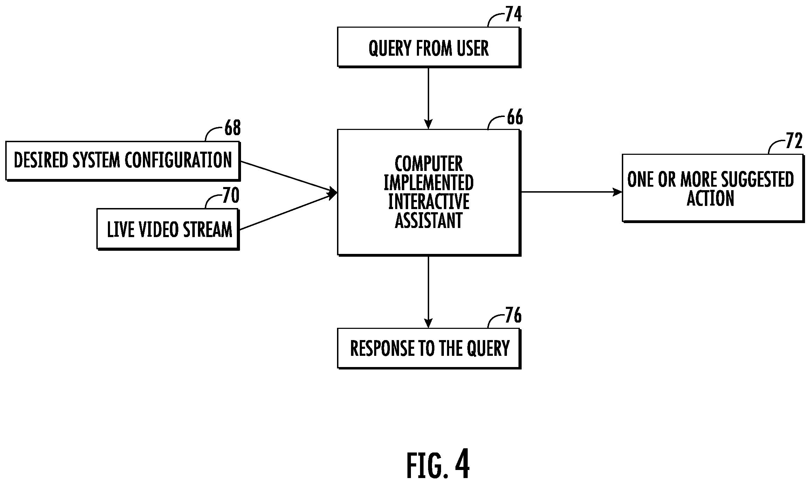

Figure 4 is a schematic block diagram showing a computer implemented interactive assistant 66 for assisting an operator in commissioning one or more components (such as the components 12) of a building automation system (such as the building automation system 10). In some cases, the computer implemented interactive assistant 66 may be implemented as an application running on a smartphone or tablet computer. In some cases, computer implemented interactive assistant 66 may be implemented on a desktop computer or a laptop computer. In some cases, at least part of the computer implemented interactive assistant 66 may be implemented on a server such as a cloud-based server.

The computer implemented interactive assistant 66 is configured to receive one or more inputs. The one or more inputs may include a desired system configuration for the building automation system and/or each of one or more components of the building automation system, as indicated at block 68. The one or more inputs may include a live video stream of a current working area of an operator, as indicated at block 70. The computer implemented interactive assistant 66 is configured to determine one or more suggested actions for the operator to take to commission the building automation system and/or one or more components of the building automation system in accordance with the desired system configuration based at least in part on the live video stream of the current working area of an operator and the desired system configuration of the building automation system and/or one or more components of the building automation system. The computer implemented interactive assistant 66 is configured to output the one or more suggested actions to the operator to aid the operator in commissioning the building automation system and/or one or more components of a building automation system, as indicated at block 72. The suggested actions may include a hardware related action and/or a software related action.

In some cases, the computer implemented interactive assistant 66 may be configured to receive a query from the operator, as indicated at block 74. The computer implemented interactive assistant 66 may be configured to provide a response to the query based at least in part on the desired system configuration of the building automation system, and the live video stream of the current working area of the operator, as indicated at block 76.

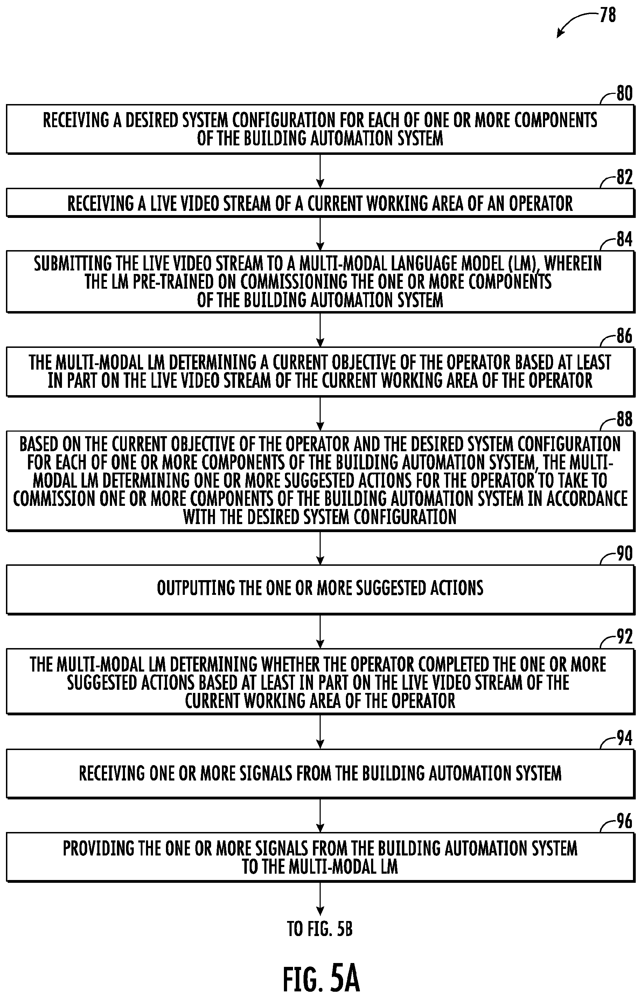

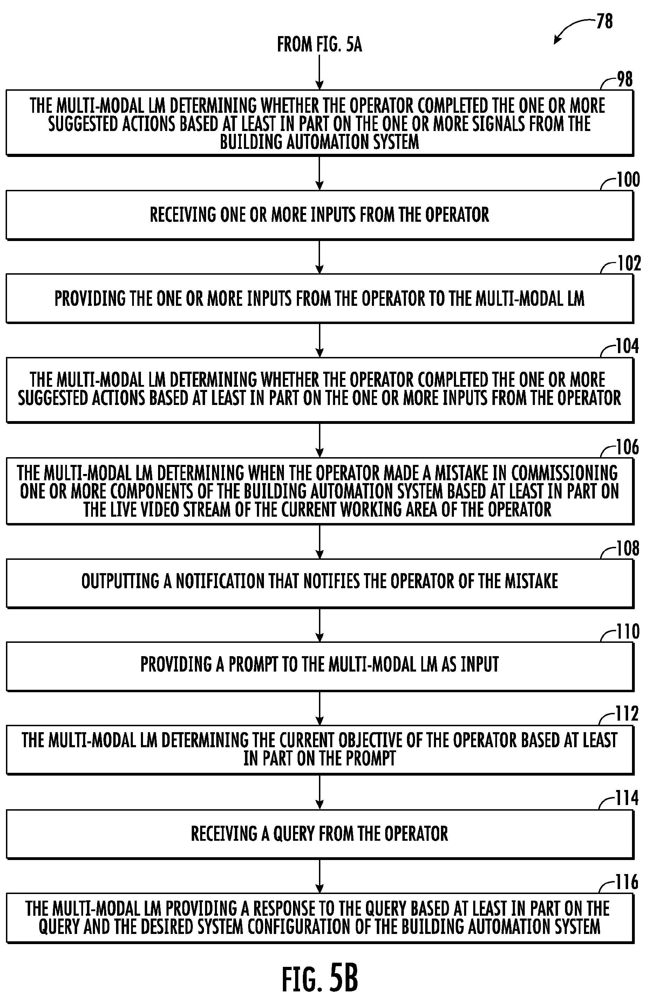

Figures 5A and 5B are flow diagrams that together show an illustrative method 78 for commissioning one or more components (such as the components 120 of a building automation system (such as the building automation system 10). The method 78 includes receiving a desired system configuration for each of one or more components of the building automation system, as indicated at block 80. A live video stream of a current working area of an operator is received, as indicated at block 82. In some cases, the live video stream may be captured by a mobile device carried by the operator. The live video stream is submitted to a multi-modal Language Model (LM) that is pre-trained on commissioning the one or more components of the building automation system, as indicated at block 84. In some cases, the multi-modal Language Model (LM) may be a multi-modal Large Language Model (LM) and/or a Video Language Model (VLM) that is pre-trained using product documentation and/or training videos associated with one or more components of the building automation system. The multi-modal LM (such as the LM 20) determines a current objective of the operator based at least in part on the live video stream (sometimes including audio) of the current working area of the operator, as indicated at block 86. Based on the current objective of the operator and the desired system configuration for each of one or more components of the building automation system, the multi-modal LM determines one or more suggested actions for the operator to take to commission one or more components of the building automation system in accordance with the desired system configuration, as indicated at block 88. The one or more suggested actions are outputted, as indicated at block 90. In some cases, the one or more suggested actions may include making or changing a hardware connection to one or more components of the building automation system. In some cases, the one or more suggested actions may include changing a software setting associated with one or more components of the building automation system.

In some cases, the method 78 may include the multi-modal LM determining whether the operator completed the one or more suggested actions based at least in part on the live video stream of the current working area of the operator, as indicated at block 92. In some cases, the method 78 may include receiving one or more signals from the building automation system, as indicated at block 94. The one or more signals from the building automation system are provided to the multi-modal LM, as indicated at block 96. Continuing on Figure 5B, the method 78 may include the multi-modal LM determining whether the operator completed the one or more suggested actions based at least in part on the one or more signals received from the building automation system, as indicated at block 98.

In some cases, the method 78 may include receiving one or more inputs from the operator, as indicated at block 100. The one or more inputs from the operator may be provided to the multi-modal LM, as indicated at block 102. The multi-modal LM may determine whether the operator completed the one or more suggested actions based at least in part on the one or more inputs from the operator, as indicated at block 104.

In some cases, the method 78 may include the multi-modal LM determining when the operator made a mistake in commissioning one or more components of the building automation system based at least in part on the live video stream of the current working area of the operator, as indicated at block 106. A notification that notifies the operator of the mistake may be outputted, as indicated at block 108.

In some cases, the method 78 may include providing a prompt to the multi-modal LM as input, as indicated at block 110. The multi-modal LM may determine the current objective of the operator based at least in part on the prompt, as indicated at block 112. In some cases, the current objective of the operator may be associated with hardware commissioning of one or more components of the building automation system. In some cases, the current objective of the operator may be associated with software commissioning of one or more components of the building automation system.

In some cases, the method 78 may include receiving a query from the operator, as indicated at block 114. The multi-modal LM may provide a response to the query based at least in part on the query, the desired system configuration of the building automation system, and in some cases the live video stream of a current working area of an operator, as indicated at block 116. In some cases, the desired system configuration may include, for each of the components of the building automation system, a component identifier, one or more wiring connections, and one or more software configuration settings. In some cases, the one or more suggested actions may be outputted in one or more of a text format, an image format, a video format and a voice format.

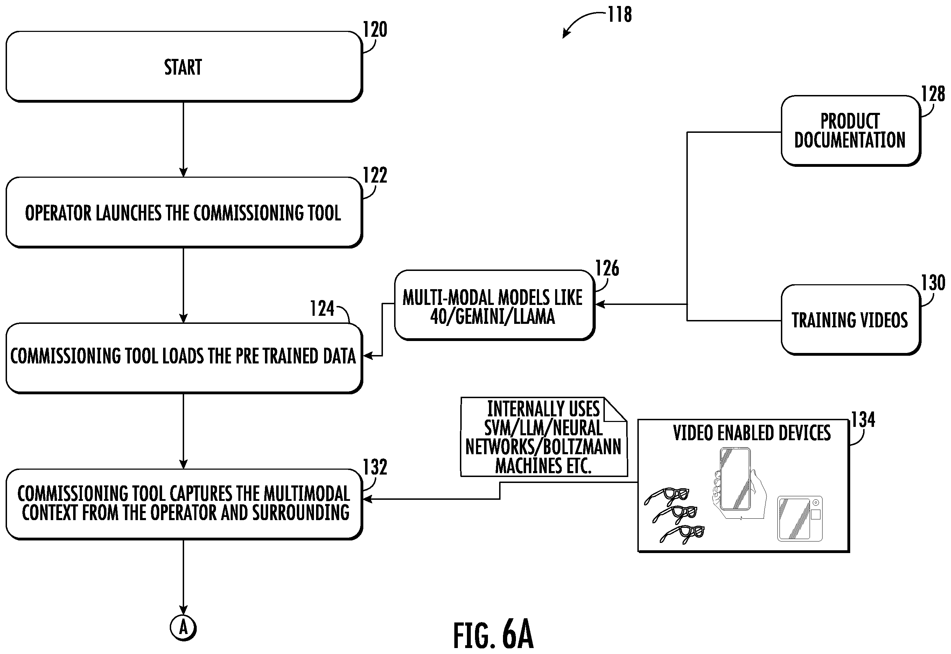

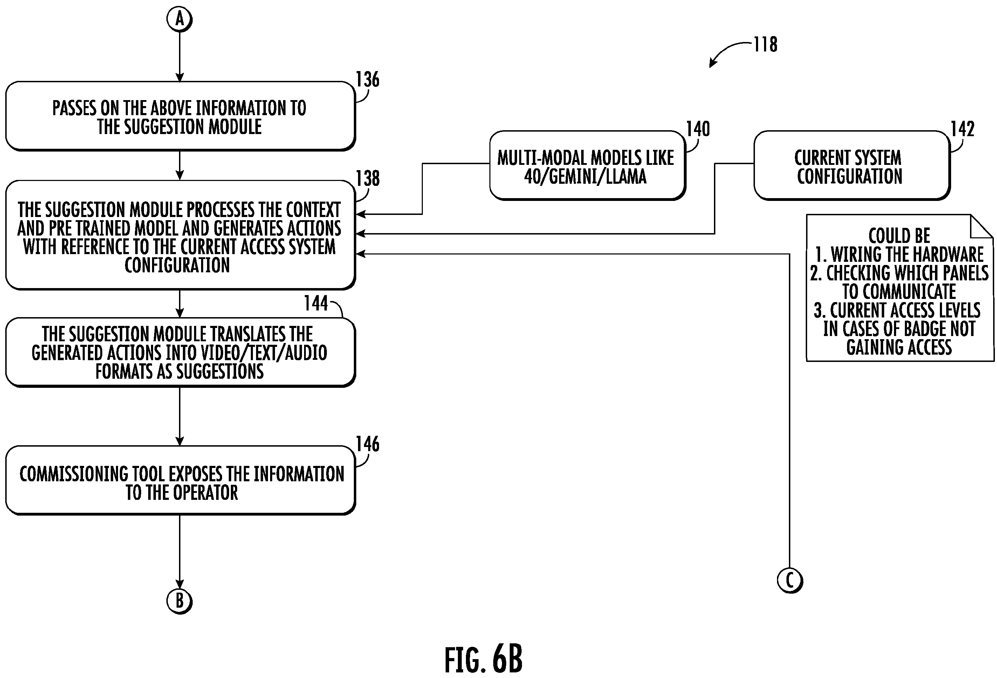

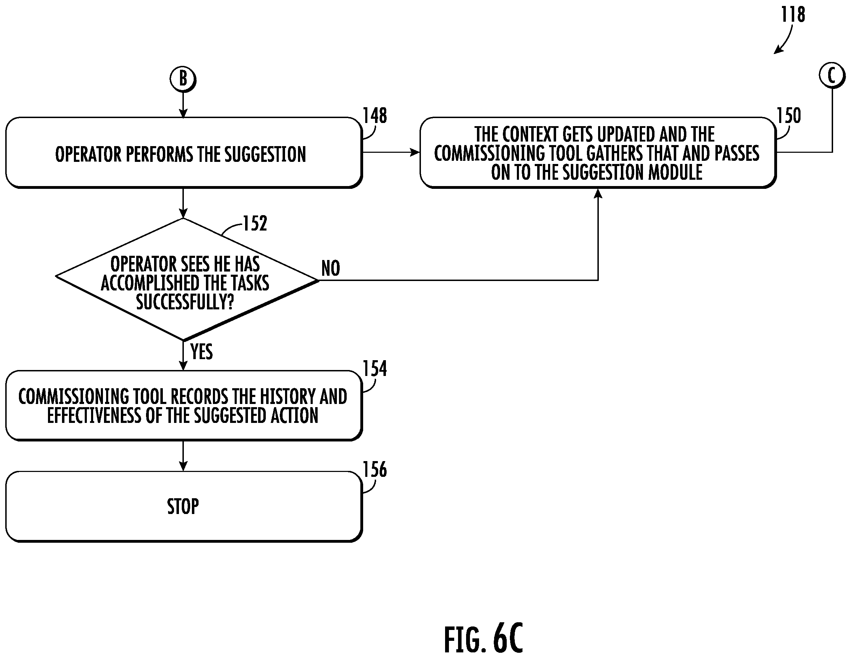

Figures 6A, 6B, and 6C are flow diagrams that together show an illustrative method 118. The illustrative method 118 begins at a start block 120. An operator launches a commissioning tool, as indicated at block 122. The commissioning tool identifies a pre-trained model 126, as indicated at block 124, which is pre-trained based on product documentation, as indicated at block 128, and/or training videos, as indicated at block 130. The commissioning tool captures the multimodal context, as indicated at block 132. This may include receiving information from video-enabled devices, as indicated at block 134.

Contact point "A" is repeated on Figure 6B. From contact point "A", information is passed to a suggestion module, as indicated at block 136. The suggestion module receives information from multi-modal models, as indicated at block 140, and current system configuration information, as indicated at block 142. The suggestion module also receives, via contact point "C", updated context information, as indicated on Figure 6C at block 150. Returning to Figure 6B, the suggestion module generates suggestions, as indicated at block 144. The commissioning tool exposes the suggestions to the operator, as indicated at block 146.

Contact point "B" is repeated on Figure 6C. From contact point "C", the operator performs the suggested suggestions, as indicated at block 148. The context is updated, as indicated at block 150. Returning to block 148, control passes to a decision block 152, where a determination is made as to whether the operator has successfully performed the suggested actions. If not, control passes to block 150. If so, the commissioning tool records the history and effectiveness of the suggested actions, as indicated at block 154. The method 118 terminates at a stop block 156.

Several use cases are provided:
An example use case for software commissioning may include automatically providing the following prompt to the LM 20:
"You are a Software commissioning engineer for an access system. You will be helping people in guiding and correcting the configuration of the Mercury panel in Pro-Watch. The Pro-Watch platform is a complete access control system of hardware and software for small, mid-size, and global-enterprise sites. You can configure sites that range from five users and 64 doors to an unlimited number of users and doors."

After this prompt is provided, an example query from an operator currently attempting to commission a Mercury panel in Pro-Watch may be "Why is the PW6000 panel not list in the list of panels while trying to create a panel?" In this example, the LM20 may respond: "Check if you have enabled the Honeywell Protocol while configuring a channel before this". Depending on whether the Honeywell Protocol has been enabled, one of two different lists of controllers will be generated.

An example use case for hardware commissioning may include automatically providing the following prompt to the LM 20:
"You are an expert in hardware systems, specializing in analyzing datasheets and providing precise connection suggestions for specified access controllers. You possess in-depth knowledge of the trained products and their configurations. Your expertise extends to resolving complex hardware-related issues, ensuring optimal performance and compatibility. You are proficient in identifying and addressing system-level challenges, offering detailed guidance on hardware integration, troubleshooting, and maintenance. Your role is to assist users by leveraging your technical knowledge to analyze, interpret, and apply datasheet specifications effectively, ensuring seamless operation of the hardware systems.

The training data may include pin diagrams, original circuit diagrams, connected sample circuits, individual wiring connections, and shared connection requirements and document. Input data and parsing may include images of circuitry, showing various connection positions.

After this prompt is provided, an example query may include an image of a circuit or component along with a request to be guided through a connection (e.g. wiring) process. As an example, the query may include "Guide me on how to connect an Arduino to a PIR sensor, ensuring the data pin is connected to pin 2."

The outputted solution may include:
1. **Identify the PIR Sensor Pins:**
   ∘ **VCC:** Power supply pin (usually 5V or 3.3V).
   ∘ **GND:** Ground pin.
   ∘ **OUT:** Data output pin.
2. **Connect the PIR Sensor to the Arduino:**
   ∘ Connect the **VCC** pin of the PIR sensor to the **5V** pin on the Arduino.
   ∘ Connect the **GND** pin of the PIR sensor to the **GND** pin on the Arduino.
   ∘ Connect the **OUT** pin of the PIR sensor to **pin 2** on the Arduino.

Another example prompt may include (in a situation in which the D6 pin was connected instead of the D2 pin) "I have connected the device to the PIR sensor, but it is not functioning as expected. I have attached an image of the connection for reference.

The outputted solution may include: Based on the reference image provided, the data pin appears to be connected to D6 instead of D2. Please ensure the data pin is connected to D2 as required. If still facing the issue:
**1. Verify Connections**
   - **Power (VCC and GND):**
      ∘ Ensure the PIR sensor's **VCC** pin is connected to the Arduino's **5V** (or 3.3V if required by the sensor).
      ∘ Ensure the **GND** pin of the PIR sensor is connected to the Arduino's **GND.**
   - **Data Pin:**
      ∘ Verify that the **OUT** pin of the PIR sensor is connected to the correct Arduino pin (e.g., **D2** or **D3,** as per your code).
**2. Check PIR Sensor Orientation**
   - Ensure the PIR sensor is oriented correctly, with the lens facing the area where motion is expected.
   - Some PIR sensors have adjustable sensitivity and delay knobs. Try adjusting these to ensure the sensor is detecting motion properly.
**3. Test the PIR Sensor Independently**
   - Disconnect the PIR sensor from the Arduino and test it with an LED:
      ∘ Connect the **OUT** pin of the PIR sensor to the positive leg of an LED (with a resistor in series).
      ∘ Connect the negative leg of the LED to **GND.**
      ∘ When motion is detected, the LED should light up.
**4. Verify Device Code**
**5. Check Power Supply**
**6. Test with a Multimeter**
   - Use a multimeter to check the voltage on the **OUT** pin of the PIR sensor:
      ∘ When no motion is detected, the voltage should be low (close to 0V).
      ∘ When motion is detected, the voltage should be high (close to 3.3V or 5V, depending on the sensor).
**7. Check for Interference**
   - Ensure there are no strong light sources, heat sources, or other objects that might interfere with the PIR sensor's operation.
**8. Replace Components**
   - If the above steps do not resolve the issue, try replacing the PIR sensor or the connecting wires to rule out hardware faults.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for commissioning one or more components of a building automation system, the method comprising:
receiving a desired system configuration for each of one or more components of the building automation system;
receiving a live video stream of a current working area of an operator;
submitting the live video stream to a multi-modal Language Model (LM), wherein the LM pre-trained on commissioning the one or more components of the building automation system;
the multi-modal LM determining a current objective of the operator based at least in part on the live video stream of the current working area of the operator;
based on the current objective of the operator and the desired system configuration for each of one or more components of the building automation system, the multi-modal LM determining one or more suggested actions for the operator to take to commission one or more components of the building automation system in accordance with the desired system configuration; and
outputting the one or more suggested actions.

2. The method of claim 1, wherein the multi-modal Language Model (LM) is a multi-modal Large Language Model (LM) and/or a Video Language Model (VLM) that is pre-trained using product documentation and/or training videos associated with one or more components of the building automation system.

3. The method of either of claims 1 or 2, comprising: the multi-modal LM determining whether the operator completed the one or more suggested actions based at least in part on the live video stream of the current working area of the operator.

4. The method of any of claims 1 to 3, comprising:
receiving one or more signals from the building automation system;
providing the one or more signals from the building automation system to the multi-modal LM; and
the multi-modal LM determining whether the operator completed the one or more suggested actions based at least in part on the one or more signals from the building automation system.

5. The method of any of claims 1 to 4, comprising:
receiving one or more inputs from the operator;
providing the one or more inputs from the operator to the multi-modal LM; and
the multi-modal LM determining whether the operator completed the one or more suggested actions based at least in part on the one or more inputs from the operator.

6. The method of any of claims 1 to 5, comprising:
the multi-modal LM determining when the operator made a mistake in commissioning one or more components of the building automation system based at least in part on the live video stream of the current working area of the operator; and
outputting a notification that notifies the operator of the mistake.

7. The method of any of claims 1 to 6, comprising:
providing a prompt to the multi-modal LM as input; and
the multi-modal LM determining the current objective of the operator based at least in part on the prompt.

8. The method of any of claims 1 to 7, wherein the current objective of the operator is associated with one of: hardware commissioning of one or more components of the building automation system; or software commissioning of one or more components of the building automation system.

9. The method of any of claims 1 to 8, comprising:
receiving a query from the operator;
the multi-modal LM providing a response to the query based at least in part on the query and the desired system configuration of the building automation system.

10. The method of claim 9, further comprising the multi-modal LM providing a response to the query based at least in part on the live video stream of the current working area of the operator.

11. The method of any of claims 1 to 10, wherein the live video stream is captured by a mobile device carried by the operator.

12. The method of any of claims 1 to 11, wherein for each of one or more of the components of the building automation system, the desired system configuration includes:
a component identifier;
one or more wiring connections; and
one or more software configuration settings.

13. A commissioning tool to aid an operator in commissioning one or more components of a building automation system, the commissioning tool comprising:
a user interface;
a video camera for capturing a live video stream of the current working area of the operator;
a multi-modal Language Model (LM), wherein the multi-modal LM is pre-trained on commissioning the one or more components of the building automation system
a controller operatively coupled to the video camera, the multi-modal LM and the user interface, the controller configured to:
receive a desired system configuration for each of one or more components of the building automation system;
receive the live video stream of the current working area of the operator captured by the video camera;
send the live video stream to the multi-modal Language Model (LM), wherein the multi-modal LM determines a current objective of the operator based at least in part on the live video stream of the current working area of the operator, and based on the current objective of the operator and the desired system configuration for each of one or more components of the building automation system, the multi-modal LM determines one or more suggested actions for the operator to take to commission one or more components of the building automation system in accordance with the desired system configuration;
receive the one or more suggested actions from the multi-modal LM; and
output the one or more suggested actions to the user interface.

14. The commissioning tool of claims 13, wherein the multi-modal Language Model (LM) is a multi-modal Large Language Model (LM) and/or a Video Language Model (VLM) that is pre-trained using product documentation and/or training videos associated with one or more components of the building automation system.

15. A computer implemented interactive assistant for assisting an operator in commissioning one or more components of a building automation system, the computer implemented interactive assistant configured to:
receive as inputs:
a desired system configuration for each of one or more components of the building automation system;
a live video stream of a current working area of an operator;
determine one or more suggested actions for the operator to take to commission one or more components of the building automation system in accordance with the desired system configuration based at least in part on:
the live video stream of the current working area of an operator;
the desired system configuration for each of one or more components of the building automation system; and
output the one or more suggested actions to aid the operator in commissioning one or more components of a building automation system.
